# EUROPEAN PATENT APPLICATION

(11) **EP 3 597 397 A1**
(43) Date of publication of application: **22.01.2020**
(21) Application number: 18184435.8
(22) Date of filing: 19.07.2018
(51) Int. Cl.: B29C 64/124, B29C 64/153, B29C 64/393, B22F 3/105

(54) **A METHOD AND SYSTEM FOR LAYERWISE PRODUCTION OF A TANGIBLE OBJECT**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: V.O.

(57) **Abstract**

A method and system for layerwise production of a tangible object, whereby the object is built up layer per layer by repeatedly providing a layer of building material onto a carrier and repeatedly performing method cycles. Each method cycle including selectively exposing, using radiation from at least one radiation source, one or more predetermined regions, for writing the layer of the tangible object. The one or more identified predetermined regions are selectively preheated prior to selectively writing these identified regions in a same method cycle. During selective preheating a temperature of the one or more preheating regions is locally increased from an initial temperature to an elevated preheating temperature remaining below a writing temperature of the building material in said preheating regions.

## Description

### FIELD OF THE INVENTION

The invention relates to a method for layerwise production of a tangible object whereby the object is built up layer per layer by repeatedly providing a layer of building material onto a carrier and repeatedly performing method cycles, each method cycle comprising the step of: providing layer data corresponding to a layer of the tangible object, identifying one or more predetermined regions of the layer of building material to be written (e.g. cured, sintered, etc.), based on the layer data, selectively exposing, using radiation from at least one radiation source, the one or more predetermined regions, for writing the layer of the tangible object, providing a next layer of building material, the next layer of building material being provided consecutive to the selectively exposed preceding layer of building material, for selective exposure thereof during a subsequent method cycle. The invention is further directed at a system for applying such a method.

### BACKGROUND TO THE INVENTION

A class of existing additive manufacturing methods selectively exposes a layer of material with an energy beam (e.g. light) in order to form a layer of an object. The layer of the object can be hardened or become sticky as a result of this beam exposure.

Specific examples of such additive manufacturing methods are powder bed fusion and selective laser annealing/sintering (SLA/SLS) type of processes. Powder bed fusion, for example, is a method to fuse material particles (e.g. powder) together via energy absorption. In a typical embodiment, a focused laser beam heats the layer of deposited material such that particles fuse together via sintering or particles melt together via a so-called melt pool. Materials that can be processed with such methods include plastics (e.g. polymers), metals, ceramics. In another embodiment, an electron or ion beam is used to provide the necessary heat for sintering or fusing particles or material parts together. The temperature time profile of the building material is typically a determining parameter for the quality of the created layer of the object.

Typically the material used for forming the tangible object experiences high thermal stresses. For example, if a polymer at room temperature is hardened by means of a light source, the material is typically heated from around 20 degrees Celsius to 160 degrees Celsius or higher, which can result in significant thermal stresses. Such a thermal shock can be accompanied by detrimental warping of the formed tangible object, and/or other defects.

There is a need for an efficient way to avoid such thermal stresses, preferably applicable for both continuous and batch-wise systems. Furthermore, there is a need for being able to better guarantee the obtained properties, quality and dimensional accuracy of the formed tangible object.

### SUMMARY OF THE INVENTION

It is an object of the invention to provide for a method and a system that obviates at least one of the above mentioned drawbacks.

Additionally or alternatively, it is an object of the invention to provide a method and system usable in multi-material additive manufacturing.

Additionally or alternatively, it is an object of the invention to provide an additive manufacturing method and system resulting in improved quality and/or dimensional accuracy of the obtained tangible object.

Additionally or alternatively, it is an object of the invention to provide a method and system which can be employed in both continuous and batch-wise processes.

Thereto, the invention provides for a method for layerwise production of a tangible object, whereby the object is built up layer per layer by repeatedly providing a layer of building material onto a carrier and repeatedly performing method cycles, each method cycle comprising the step of: providing layer data corresponding to a layer of the tangible object; identifying one or more predetermined regions of the layer of building material to be written (e.g. cured, sintered, etc.), based on the layer data; selectively exposing, using radiation from at least one radiation source, the one or more predetermined regions, for writing the layer of the tangible object; providing a next layer of building material, the next layer of building material being provided consecutive to the selectively exposed preceding layer of building material, for selective exposure thereof during a subsequent method cycle; wherein one or more method cycles further comprise a further heating step for selectively preheating, using radiation from at least one radiation source, the one or more identified predetermined regions prior to selectively writing these identified regions in a same method cycle, wherein one or more preheating regions of the layer of building material are determined based on the identified one or more predetermined regions of the layer of building material to be written; and wherein during selective preheating a temperature of the one or more preheating regions is locally increased from an initial temperature to an elevated preheating temperature remaining below a writing temperature of the building material in said preheating regions.

The layer of building material can be selectively and locally preheated to a preheating temperature at the one or more the preheating regions. The location of the one or more preheating regions on a layer of building material can be selected (e.g. by a controller) based on the one or more predetermined regions of the building material to be written (e.g. cured, sintered, (photo-) thermally hardened, (photo-) thermally imprinted, annealed, etc.). The preheating regions may be at or near the one or more predetermined regions. It is also possible that the preheating regions are at least near to (e.g. contiguous to) the identified predetermined regions of the layer of building material to be written. In this way, it can be prevented that building material is heated up at locations not requiring preheating for subsequently writing the layer of building material at the one or more predetermined regions.

For instance, when the building material is uniformly preheated using for example an infrared radiation source, the building material may deteriorate faster. The aging process of the building material may be accelerated as a result of unnecessary preheating at regions not requiring said preheating. This is for instance also the case if the building material is preheated in an oven or heated room. For instance, the building material may become unusable after several times of use when the total volume or complete layer of building material is preheated for only writing one or more predetermined regions. Contrary to applying a uniform preheating, the current invention employs a selective localized preheating at specific predetermined locations at the layer of building material (i.e. preheating regions). Typically, only a small portion of the total volume is actually used for building the tangible object. By employing selective preheating of the preheating regions, the properties of the building material can be longer preserved. Hence, the building material may longer keep its properties and qualities since building material not requiring preheating is not temperature treated. The quality of the remaining building material may thus be maintained, such that it can be re-used in further additive manufacturing processes. In this way, the efficiency and process costs for manufacturing the tangible object can also be reduced. Additionally or alternatively, other for instance more sensitive building materials may also be used. Selective preheating at confined preheating regions predetermined based on the one or more predetermined regions to be written, may also allow the use of a plurality of building materials during the manufacturing process. The layer of building material may for instance have portions made out of a first building material and portions made out of a second building material, with different material properties, such that localized and customized preheating can be performed depending on the building material.

A controller may be employed for determining the one or more predetermined regions and the one or more preheating regions associated therewith. Based on the one or more predetermined regions, the controller may be configured to select a first set of regions that are each to be preheated, i.e. one or more preheating regions, and a second set of regions that are to be excluded from preheating, i.e. one or more non-preheating regions. The layer of building material may thus be divided up into preheating regions and non-preheating regions. The controller may be configured to control the at least one radiation source for selectively preheating only the one or more preheating regions on the layer of building material. By partitioning the layer of building material into preheating regions and non-preheating regions, the controller can identify discrete zones which require preheating for subsequently writing of the one or more predetermined regions. During pre-heating of the selected preheating regions of the layer of building material, also the temperature of the identified one or more predetermined to be written regions of the layer of building material can be locally increased from an initial temperature to an elevated temperature remaining below a writing temperature of the building material in said one or more predetermined to be written regions.

Local temperature-time history of the layer of building material can influence the obtained properties of the formed tangible object, such as strength, density, crystallinity, etc. By controlling a temperature-time profile, the desired product/material properties can be obtained. For instance, unwanted shrinkage and/or other defects can be avoided by using the preheating step. By preheating prior to temperature writing the building material, the heating rate can be locally adjusted. The preheating regions are chosen depending on the one or more predetermined regions of the layer of building material to be written.

By means of selective irradiation (e.g. illumination) of the layer of building material, a selected portion of the layer of building material can be written. In this way, the selected portion can be solidified or hardened in order to form a layer of the formed tangible object. This process can be repeated for layerwise forming the tangible object (stacks of hardened layers written by means of selective irradiation).

The building material may be a medium for additive manufacturing or stereolithography. VAT materials can be employed, such as polymer and/or ceramic materials. In VAT polymerization ultraviolet (UV) light hardens a liquid in a 3D printing process. For instance, a liquid of ultraviolet curable photopolymer resin and an ultraviolet laser can be used to build layers of the object one at a time. For each layer, the laser beam can trace a cross-section of the object pattern on the surface of the liquid resin. The pattern traced on the resin can be cured, solidified and joined to a layer below by exposure to the ultraviolet laser light. In an example, radiation (e.g. UV light) is concentrated on specific areas of a vat filled with the medium. Through the concentration of the radiation, which is controlled by a controller (e.g. computer) that follows a preloaded CAD file, a layer of the medium, being a curable material, can be hardened one layer at a time. The hardened medium can be substantially solid.

The writing temperature can for instance be a curing temperature, a sintering temperature, an annealing temperature, an imprinting temperature, a (photo-)thermal hardening temperature etc., depending on the employed writing process, such as for example thermal curing, thermal sintering, annealing, photo-thermal imprinting, (photo-) thermal hardening process, etc. Furthermore, the predetermined regions may be substantially 2D regions (e.g. thin layer) or substantially 3D regions (e.g. voxels forming part of a 3D object).

The localized preheating step can be used in both a continuous process and a batch process. Advantageously, the selective preheating can facilitate additive manufacturing in a process with a moving production platform (e.g. continuous process).

Optionally, the one or more preheating regions selectively encompass the one or more predetermined regions of the layer of building material to be written.

Based on the one or more predetermined regions the one or more preheating regions can be selected. It can be determined (e.g. by a controller) which portions of the layer of building material are to be heated such as to preheat the one or more predetermined regions to the elevated preheating temperature. The dissipation of heat may be taken into account.

The one or more preheating regions may substantially cover the one or more predetermined regions. Optionally, the one or more preheating regions have substantially the same dimensions as the one or more predetermined regions (overlapping regions). Optionally, the one or more preheating regions are larger than the one or more predetermined regions such that an additional space around the one or more predetermined regions is also covered. Optionally, the one or more preheating regions are chosen such that 0-50% additional space around the one or more predetermined regions is heated, more preferably 0-20%. Alternatively, the one or more preheating regions may be smaller than the one or more predetermined regions, wherein a preheated area expands in function of time as a result of heat dissipation.

As a result of preheating, the layer of building material at the preheating regions can be locally heated to a temperature near but remaining below the writing temperature.

Optionally, the elevated preheating temperature is in a range of 0.1 to 50 % degrees Celsius smaller than the writing temperature, preferably 0.5 to 30 %, more preferably 1 to 20 % and most preferably 1 to 10 %.

The building material can be locally, at the selected preheating regions, brought to a temperature just below the writing temperature, e.g. sintering temperature or melting temperature depending on the employed additive manufacturing process. After preheating of said preheating regions, radiation (e.g. energy beam) from the at least one radiation source can be used to further heat up the building material at the one or more predetermined regions in order to form a layer of the tangible object. For example, the building material may be selectively preheated at the preheating regions to an elevated temperature Tₑ, prior to further heating it to T_{c} (> Tₑ) for writing the building material at the one or more predetermined regions in the layer of building material. The increase of temperature from the elevated preheating temperature Tₑ to writing temperature T_{c} may be limited so that the thermal and mechanical stresses induced are also limited. Advantageously, it can be prevented in this way that the formed tangible object is warped. For example, the building material can be locally heated at the preheating regions to approximately 150 degrees Celsius, prior to further heating it to approximately 153 degrees Celsius for writing the material. It will be appreciated that the preheating temperature and writing temperature depend on the material properties of the building material.

Optionally, one or more method cycles further comprise a selective postheating step for postheating, using radiation from at least one radiation source, the one or more predetermined regions written in a same method cycle, wherein during postheating a cooling rate at the one or more predetermined written regions is decreased.

The heating rate and the cooling rate may play an important role in the obtained properties of the formed tangible object. The quality of the material and the dimensional accuracy (e.g. resolution) can be influenced by controlling the temperature-time profile. Preheating can be used to adjust the heating rate, and postheating can be used to adjust the cooling rate.

In some cases it may be desirable that the cooling rate, i.e. the temperature decrease in function of time after the material has been thermowritten (e.g. cured, sintered, annealed, etc.) at the one or more predetermined regions of the layer of building material, is carried out more slowly in order to avoid obtaining a brittle written material. In other cases it may be desirable that the temperature decreases very quickly in order to obtain a better geometric accuracy. These parameters can be better controlled using the selective postheating. The cooling rate can be chosen depending on the process and the material properties of the building material.

Similar to preheating, the controller may configured to determine the one or more predetermined regions on the layer of building material and the one or more postheating regions associated therewith. Based on the one or more predetermined regions, the controller may be configured to select a first set of regions that are each to be postheated, i.e. one or more postheating regions, and a second set of regions that are to be excluded from postheated, i.e. one or more non-postheating regions. The layer of building material may thus be divided up into postheating regions and non-postheating regions. The controller may be configured to control the at least one radiation source for selectively postheating only the one or more postheating regions on the layer of building material, while the non-postheating regions remain untreated. By partitioning the layer of building material into postheating regions and non-postheating regions, the controller can identify discrete zones which require postheating after prior writing of the one or more predetermined regions.

Optionally, a first building material and a second building material are used, the first building material having a first writing temperature and the second building material having a second writing temperature different than the first writing temperature, wherein an amount of preheating and/or postheating is chosen depending on the building material of the one or more predetermined regions to be written.

A multi-material additive manufacturing can be used with building materials having different material properties (e.g. different writing temperatures). Preheating and/or postheating can be employed. The effect of preheating of one material on another material can be reduced by means of the localized selective preheating. More complex tangible objects can be formed in this way. Having knowledge of the type of material to be written locally, the dose of radiation used during preheating, writing (e.g. curing), and optional post heating can be optimized by the controller of the system. This enables to optimally achieve the advantages of the preheating and optional post heating steps in respect of the different materials of which the tangible object is to be formed.

Optionally, at least one scan head is provided having a plurality of radiation sources configured to provide an adjustable radiation dose, wherein the scan head is relatively scanned across the surface of the layer of building material in at least one running direction for selectively irradiating the layer of building material for forming the layer of the tangible object.

The running direction can be the direction of relative movement between the scan head and the layer of building material along its surface. A large area can be covered using a plurality of radiation sources. The plurality of radiation sources can be used for controlling or tuning the temperature-time profile for instance using multiple laser beams. The preheating and subsequent writing (and optional subsequent postheating) can be carried out in one stroke in which the at least one scan head is relatively moved along the layer of the building material. With a one dimensional movement of the scan head with an array of radiation sources the complete treatment of the layer of building material can be carried out. For this purpose, the radiation sources may cover an entire coverage width seen in the at least one running direction. Optionally, preheating, writing and optional postheating can be carried out in a single stroke. Alternatively, the preheating, writing and optional postheating may be carried out in different strokes. For instance, a first stroke may be used for preheating, followed by a stroke for writing, and optionally followed by a stroke for postheating. In an alternative example, the preheating and writing are performed in a single stroke, wherein an additional stroke is performed for carrying out the postheating. Postheating may also be carried out using different means, such as for example an infrared lamp.

Optionally, one or more strokes are carried out for a different method cycle. The selective preheating may be carried out for a successive method cycle (for forming a successive layer of the tangible object). It may also be possible to carry out selective postheating for a previous method cycle (in which a previous layer of the tangible object is formed). A combination of inter-cycle preheating and postheating is also possible.

Optionally, each of the plurality of radiation sources has an adjustable irradiation power. A radiation beam (e.g. light) can be directed towards the building material. The localized irradiation can be carried out during relative movement between the scan head and the layer of building material. The scan head can be swept along the surface of the building material. The plurality of radiation sources may form a plurality of incident/impingement spots when activated, wherein as a result of the relative movement, a plurality of paths can be obtained in the running direction. The heat around the incident spot can ensure that a region larger than the spot itself is heated. During a stroke, the beam intensity at a plurality of incident spots along the paths in the running direction can be adjusted for selectively preheating, writing (e.g. curing, sintering, ...) and optionally postheating the layer of building material. The selective photo-thermal preheating, writing and optional postheating can be performed in one or more strokes. Additionally or alternatively, it is also possible to modulate a pulse of the energy beam (e.g. light) to adjust the required energy beam.

Optionally, a plurality of subsets of radiation sources are provided being offset from each other in the at least one running direction, wherein at least one preheating subset is used for preheating the one or more predetermined to be written regions, and wherein at least one writing subset is used for subsequently writing the one or more predetermined regions in order to form the layer of the tangible object.

Optionally, the distance between the two or more subsets of radiation sources is adjustable. It is also possible that the distance is fixed. The subsets may for instance be arranged in a scanning unit.

Optionally, further at least one postheating subset is used for providing postheating.

Optionally, different radiation sources are employed for performing the preheating and the writing. Additionally or alternatively, different radiation sources are employed for performing the writing and the postheating. Additionally or alternatively, different radiation sources are employed for performing the preheating and the postheating.

Optionally, the radiation sources of the at least one writing subset provide a finer incident spot size on the layer of building material than the at least one preheating subset and/or the at least one postheating subset.

At least one of the subsets of radiation sources used for providing preheating and/or postheating may have a lower resolution than the at least one of the two or more subset of radiation sources used for forming the layer of the tangible object. Preheating and optional postheating may require less accuracy than writing.

Optionally, the plurality of subsets are arranged in separate scan heads distanced from each other in the running direction.

The scan heads may be discrete scan heads being movable with respect to each other. Alternatively, the scan heads may be connected to each other allowing a uniform movement. In an example, the scan heads may form a unitary part. Many variants are possible. Optionally, the subset of radiation sources are arranged in an array along a line.

Optionally, a cascade of scan heads is employed being arranged in sequence in the at least one running direction, wherein when the cascade of scan heads are moved in the at least one running direction, a scan head with a preheating subset is followed by a scan head with a writing subset, optionally further followed by a scan head with a postheating subset.

In the at least one running direction paths of the plurality of incident spots illuminated by the first subset of radiation sources (when activated) can be followed by the paths of the plurality of beams provided by the second subset of radiation sources. Optionally, the paths of the plurality of incident spots illuminated by the first sub set of radiation sources at least partially overlaps with the paths of the plurality of beams provided by the second subset of radiation sources.

Optionally, a sensor is provided configured for providing feedback indicative of a temperature distribution on the layer of building material, wherein the selective radiation exposure from the at least one radiation source for preheating and/or writing is determined based on the feedback. Based on the temperature of the layer of building material, a controller may determine which radiation exposure is required for locally changing the temperature of the building material to a desired temperature. The temperature distribution and/or temperature-time profile may be provided as an input for controlling the selective radiation exposure process.

The quality of the manufactured product can be substantially enhanced using feedback data from the camera for controlling the preheating, writing and/or postheating process. An indication of the temperature distribution may for instance be obtained by temperature measurements for instance using a thermal camera.

According to an aspect, the invention further relates to an additive manufacturing apparatus for carrying out the method according to the invention.

According to an aspect, the invention relates to a system for layerwise production of a tangible object. The system comprising: a controller configured to operate the system; a carrier; a layer depositor configured for providing a layer of building material to the carrier; an exposure device comprising at least one radiation source; and a scanner actuator for moving the carrier and the exposure device relative to each other. The controller is configured to repeatedly perform method cycles, each method cycle comprising the steps of: providing layer data corresponding to a layer of the tangible object; identifying, based on the layer data, one or more predetermined regions of the layer of building material to be written; controlling the exposure device and the scanner actuator for performing the selective exposing the one or more predetermined regions, for writing the layer of the tangible object by means of radiation from the at least one radiation source, wherein the exposure device cooperates with the scanner actuator for providing the selective exposure; activating the layer depositor for providing a next layer of building material consecutive to the selectively exposed preceding layer of building material, for selective exposure thereof during a subsequent method cycle. Furthermore, the controller is arranged to include a further heating step in one or more method cycles for selectively preheating, using radiation from at least one radiation source, the one or more identified predetermined regions prior to selectively writing these identified regions in a same method cycle, wherein the controller is configured to determine the one or more preheating regions of the layer of building material based on the identified one or more predetermined regions of the layer of building material to be written, and wherein during selective preheating a temperature of the one or more preheating regions is locally increased from an initial temperature to an elevated preheating temperature remaining below a writing temperature of the building material in said preheating regions.

The system can be configured to enable manufacturing of three dimensional objects from a digital model by laying down successive layers of materials in an additive process. One or more predetermined regions based on the digital model can be hardened using one or more radiation sources to form the tangible object layer per layer. The method includes at least one further heating step including at least one of preheating prior to writing and postheating after writing. Writing and the at least one further heating step such as preheating and/or postheating can be performed localized and selectively based on the one or more predetermined regions, instead over an entire surface (full coverage) or volume of the building material. In this way, the building material may not be preheated/postheated when not necessary, prolonging its usability in further additive manufacturing processes. Furthermore, advantageously multi-material additive manufacturing can be employed.

In an example, the temperature-time profile is controlled by repeatedly moving back and forth a scan head in a plurality of strokes, wherein a stroke comprising at least one of: selective pre-heating at locations (preheating regions) based on the one or more predetermined regions, or selective postheating at locations (postheating regions) based on written one or more predetermined regions.

According to an aspect, the invention further relates to a computer readable medium comprising instructions executable by one or more processors, wherein the instructions being executed are configured to operate an apparatus for carrying out the method according to the invention.

The method may employ a cascade of scan heads (e.g. light engines) for preheating, writing (writing/sintering), and postheating in order to obtain a required temperature-time profiles at each spatial location x,y,z in the building material for improved tangible object manufacturing (product properties and requirements, shrinkage, etc.).

As mentioned above, the preheating step, the writing step and the optional postheating step may be carried out by means of a radiative/energy beam from the at least one radiation source. The radiative beam may be in the form of a focused beam of electromagnetic radiation, such as for example light. It will be appreciated that other radiative beams may also be employed.

It will be appreciated that any of the aspects, features and options described in view of the method apply equally to the system. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a perspective view of a schematic diagram of a system;
Fig. 2 shows a graph of a temperature-time profile;
Fig. 3 shows a top view of a schematic diagram of a plurality of incident spots;
Fig. 4 shows a top view of a schematic diagram of a plurality of incident spots;
Fig. 5 shows a top view of a schematic diagram of a plurality of incident spots;
Fig. 6 shows a top view of a schematic diagram of a system; and
Fig. 7 shows a schematic diagram of a method.

### DETAILED DESCRIPTION

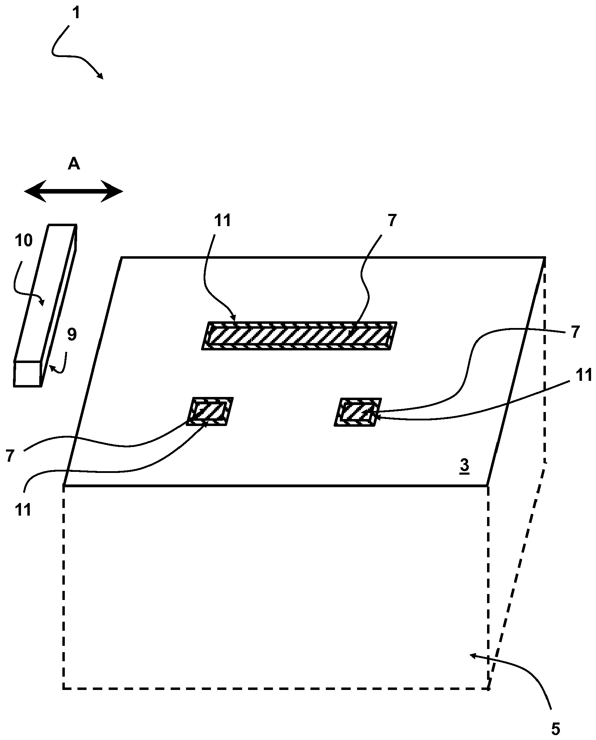

Fig. 1 shows a schematic diagram of a system 1 for layerwise production of a tangible object. The object is built up layer per layer by repeatedly providing a layer of building material 3 onto a carrier 5 and repeatedly performing method cycles. Each method cycle comprising the step of: providing layer data corresponding to a layer of the tangible object; identifying one or more predetermined regions 7 of the layer of building material 3 to be written for forming the layer of the tangible object, based on the layer data; selectively exposing, using radiation from at least one radiation source 9, the one or more predetermined regions 7, for writing the layer of the tangible object; and providing a next layer of building material, the next layer of building material being provided consecutive to the selectively exposed preceding layer of building material, for selective exposure thereof during a subsequent method cycle. The system 1 is configured to provide a further heating step in one or more method cycles for selectively preheating, using radiation from at least one radiation source 9, the one or more identified predetermined regions 7 prior to selectively writing these identified regions 7 in a same method cycle. One or more preheating regions 11 of the layer of building material 3 are determined based on the identified one or more predetermined regions 7 of the layer of building material 3 to be written. During selective preheating, a temperature of the one or more preheating regions 11 is locally increased from an initial temperature Tᵢ to an elevated preheating temperature Tₑ remaining below a writing temperature T_{c} of the building material in said preheating regions.

In this example, the at least one radiation source 9 is arranged in a scan head 10 being movably arranged in the running direction A. The scan head 10 may for example include a plurality of discrete radiation sources 9. The at least one radiation source 9 may provide electromagnetic stimulation, such as for example in the form of light. The radiation source 9 may for instance be a light emitting diode (LED), a laser, or the like.

Although in this example the scan head 10 including the at least one radiation source 9 is movably arranged relative to the layer of building material 3, it is also envisaged that a fixed radiation source 9 is employed wherein the beam of radiation is selectively directed on the layer of building material 3. Directing means may be provided for localized direction of the energy beam on the layer of building material 3 for locally preheating, writing and optionally postheating the layer of building material 3.

In the shown example, the one or more preheating regions 11 selectively encompass the one or more predetermined regions 7 of the layer of building material 3 to be written. However, it may also be possible that initially a smaller region is preheated and wherein as a result of heat dissipation in time the preheated region is expanded to a region at or near the one or more predetermined regions.

Selectively preheating the layer of building material 3 at the one or more preheating regions, being selected based on the one or more predetermined regions 7 can provide an improved accuracy and/or a higher speed of manufacturing the tangible object. An improved control over the temperature time profiles can be obtained by locally increasing the temperature of the preheating regions 11 which are linked to the one or more predetermined regions 7 to be written in the method cycle. Each successive method cycle may result in the formation of a successive layer of the tangible object.

Advantageously, the method can also be used when a plurality of different building materials is used. For example, a first building material and a second building material may be used during the additive manufacturing process, wherein the first building material has a first writing temperature and the second building material has a second writing temperature different than the first writing temperature, wherein an amount of preheating and/or postheating is chosen depending on the building material of the one or more predetermined regions to be written. Because the preheating is carried out locally on the layer of building material, selectively chosen in function of the one or more predetermined regions to be written, different preheating and/or writing temperatures can be reached locally. Defects in the formed multi-material tangible object can be prevented advantageously.

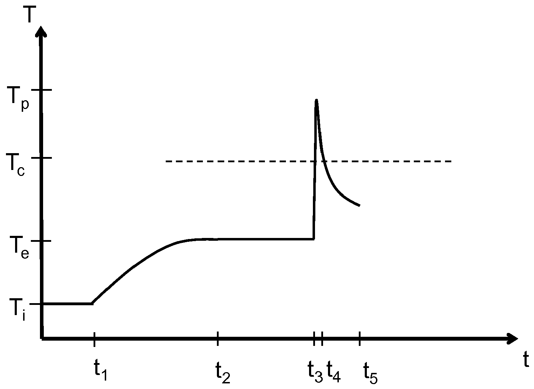

Fig. 2 shows a temperature-time profile graph at a predetermined region to be written. During pre-heating of the predetermined region, at least a preheating region associated with the predetermined region may be heated at time step t₁ from an initial temperature Tᵢ to an elevated temperature Tₑ. The predetermined region may be preheated by locally heating the one or more preheating region associated therewith. The selection of the preheating region is based on the predetermined region and can be determined by a controller. Locally and selectively the preheating region is preheated. The preheating region can be located at or near the predetermined region and/or encompass it. In this example, a substantially steady state elevated temperature is reached at time step t₂. Further, at time step t₃ the temperature of the predetermined region is momentarily increased from the substantially steady state elevated temperature Tₑ to a peak temperature Tₚ, reached at time step t₄. In this example, the peak temperature Tₚ is reached by a transient pulse. However, it may also be carried out more gradually. The momentarily increased transient pulsed peak temperature Tₚ of the predetermined region may cure the building material. The peak temperature Tₚ is above the writing temperature T_{c} required for writing the building material.

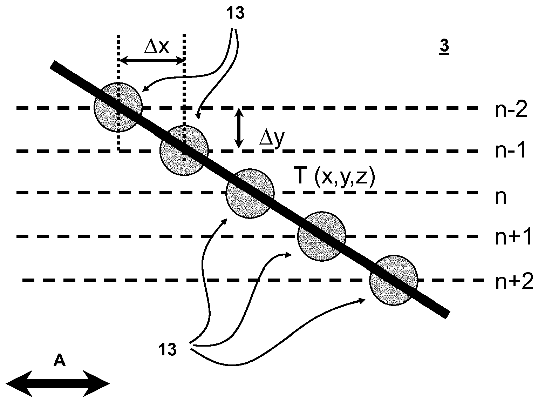

Fig. 3 shows a top view of a schematic diagram of a plurality of incident spots 13 obtainable from radiation sources 9 when activated. Each incident spot 13 may be selectively activated for locally heating a region on the layer of building material (e.g. preheating, writing, postheating). It will be appreciated that the induced heat around the incident spot can ensure that a region larger than the spot itself is heated. The radiative beams from the radiation sources 9 are directed to the surface of the layer of building material 3 for forming the incident spots 13. The radiation sources 9 may be configured to form incident spots on the layer of building material which are located in an array with an oblique angle with respect to the at least one running direction A. The radiation sources 9 may be arranged in a scan head being movable along the surface of the layer of building material 3. The incident spots 13 generated by the radiation sources 9 may at least partially overlap seen in the at least one running direction A. This may enable a more uniform coverage of the layer of building material 3 when the radiation sources 9 are scanned along the surface thereof.

The radiation sources 9 may be configured to provide an adjustable radiation dose. During scanning of the radiation sources 9 across the surface of the layer of building material in at least one running direction A, selective irradiation can be performed for forming the layer of the tangible object, wherein the one or more preheating regions are preheated followed by writing of the one or more predetermined regions. The one or more preheating regions are selected based on the associated one or more predetermined regions to be written, allowing local preheating. Regions of the layer of building material not requiring preheating may remain untreated by the radiation sources 9.

In this example, a single array of incident spots 13 are employed. The temperature T_{x,y,z} at track n can be influenced by incident spots 13 at track n due to a central write and n+1, n-1, n+2, n-2 due to thermal cross-write. Δx is the longitudinal distance between adjacent spots in light engine (time Δt = Δx /V, with V being the velocity). Δy is the lateral distance between adjacent spots. The incident spots 13 may be moved along the surface of the layer of medium with a linear velocity V. The plurality of incident spots 13 may be formed by a light engine formed in a scan head having a plurality of light sources 9 arranged next to each other in an array, for instance similar to the configuration of the generated incident spots 13.

Since the incident spots 13 of the radiation sources are at an oblique angle with respect to the moving direction A, the lateral distance can be reduced. The distance between the incident spots may be chosen based on the angle at which the array of radiation sources is positioned relative to the running direction. Optionally, a plurality of arrays of incident spots is provided positioned successively in the running direction A.

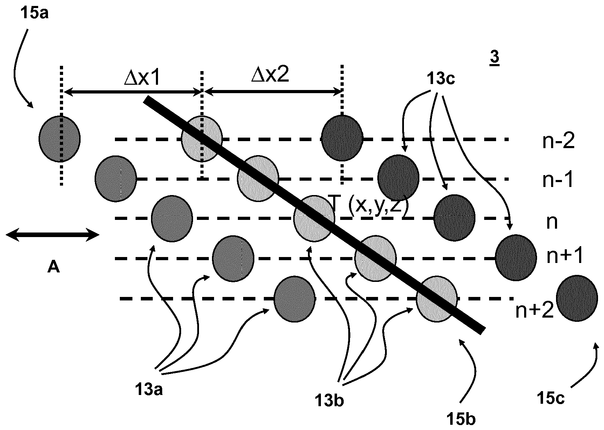

Fig. 4 shows a top view of a schematic diagram of a plurality of incident spots 13a, 13b, 13c. A plurality of subsets of radiation sources 9 may be provided being offset from each other in the at least one running direction A. At least one preheating subset can be used for preheating the one or more predetermined to be written regions. Furthermore, at least one writing subset can be used for subsequently writing the one or more predetermined regions in order to form the layer of the tangible object. In this example, a further postheating subset is used for subsequently postheating one or more postheating regions associated with the one or more predetermined regions.

In the shown example, a first subset of incident spots 13a are positioned in a first array 15a, a second subset of incident spots 13b are positioned in a second array 15b and a third subset of incident spots 13c are positioned in a third array 15c. The incident spots in an array are positioned such as to cover an entire coverage width. In this way, every position of the layer of building material can be treated by moving the incident spots in the at least one running direction A.

Temperature profiling may be carried out in x (horizontal), y (vertical) and z-direction (out of plane). The subset of incident spots 13a in the first array 15a can be used for pre-heating of the layer of building material 3 to control the heating-up rate of the one or more preheating regions determined based on the one or more predetermined regions to be written. The subset of incident spots 13b in the second array 15b can be used for actual writing, i.e. actual selective writing of the layer of building material (e.g. selective laser sintering process), to control the curing/writing process. The optional subset of incident spots 13c in the third array 15c can be used for postheating of the layer of building material in order to control the cooling rate of the one or more postheating regions determined based on the one or more written predetermined regions.

The cooling rate of the one or more predetermined regions after being written can influence obtained material properties. For instance, when the building material is made out of a polymer, the amount of obtained crosslinks can be time-dependent. The longer the polymer is kept at a high temperature after writing has been initiated, the more crosslinks can be obtained. Hence, by means of the postheating the temperature in function of time can be controlled in order to tune the material properties of the obtained tangible object.

The resolution in which the layer of building material can be heated can be increased by configuring the radiation sources 9 to provide finer incident spots.

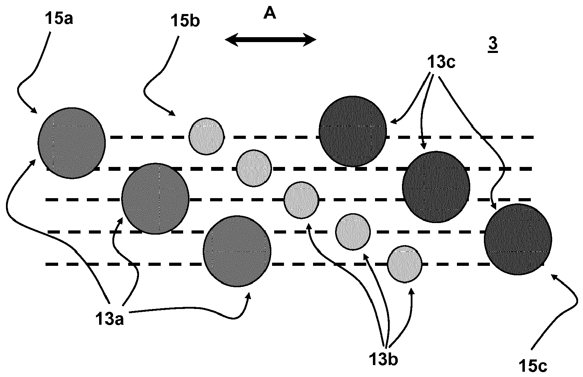

Fig. 5 shows a top view of a schematic diagram of a plurality of incident spots 13a, 13b, 13c, positioned in a first, second and third array 15a, 15b, 15c, respectively. The writing subset of radiation sources may provide incident spots 13b having a finer incident spot size on the layer of building material than the incident spots 13a and 13b provided by the preheating subset of radiation sources and the optional postheating subset of radiation sources. In this example, the impingent spot size of the subset of incident spots 13a in the first array 15a and the subset of the incident spots 13c in the third array 15c are the same. However, other configurations are also possible. For example, the incident spots 13c in the third array 15c may have a larger incident spot size than the incident spots 13a in the first array 15a since postheating may require less accurate control than postheating. Postheating may for instance be performed over a larger area on the layer of building material 3.

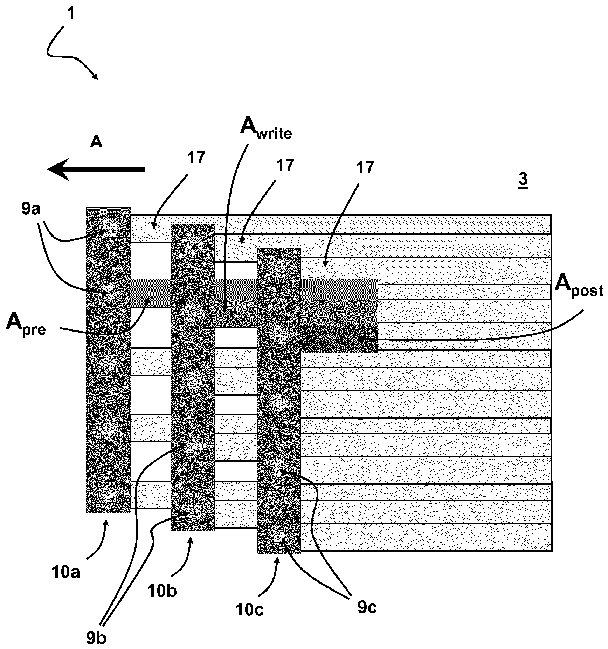

Fig. 6 shows a schematic diagram of an embodiment of a system 1 including a cascade of scan heads 10a, 10b, 10c arranged successively next to each other. Each scan head 10a, 10b, 10c includes a plurality of light sources 9a, 9b, 9c arranged to selectively generate a radiative beam directed towards the layer of building material 3. Each of the light sources 9a, 9b, 9c in the scan heads 10a, 10b, 10c have a corresponding incident spot on the layer of building material 3. A plurality of paths 17 of the incident spots is obtained due to a relative movement between the scan heads 10a, 10b, 10c and the layer of building material 3 in the at least one running direction A.

The scan heads 10a, 10b, 10c may be used for preheating, writing and/or postheating during a method cycle. In the following an exemplary strategy is described for writing a predetermined region A_{write}. The scan heads 10a, 10b, 10c are moved in the running direction along the surface of the building material 3. The first scan head 10a provides selective preheating of preheating region Aₚᵣₑ which is selected based on the predetermined region A_{write} to be written. The second scan head 10b subsequently provides selective writing of predetermined region A_{write}, and the third scan head 10c subsequently provides postheating to the postheating region Aₚₒₛₜ which is selected based on the of the predetermined region A_{write} previously written by means of the second scan head 10b.

In this example, the multi-head configuration including the scan heads 10a, 10b, 10c is moved with respect to the layer of building material 3 in the running direction A, wherein the first scan head 10a passes first along the layer of building material 3, subsequently followed by the second scan head 10b and the third scan head 10c. The distance between the scan heads 10a, 10b, 10c may be held constant during movement in the running direction A. It may be possible that the distance between the scan heads is adjustable. In this example, one of the radiation sources 9a in the first scan head 10a performs preheating of preheating region Aₚᵣₑ along the path of its incident spot. In a path adjacent to the path used for preheating, a predetermined region A_{write} is written by means of a radiation source 9b of the second scan head 10b in order to obtain a desired pattern on the layer of building material 3. In a path adjacent to the path used for writing, a postheating region Aₚₒₛₜ is heated using a radiation source 9c of the third scan head 10c for creating a temperature profile for controlled cooling in the path used for writing the predetermined region A_{write}. The radiation sources of the first and third scan head 10a, 10b, used for preheating and postheating, respectively can be driven with lower intensity and/or can be pulse modulated to create the required lower energy beam. A lower amount of energy stimulation is required than the radiation sources used for writing the building material at the one or more predetermined regions A_{write}. Due to partial overlap of the neighboring paths, the desired area can still be sufficiently affected. Advantageously, in this way no additional laser radiation sources are required dedicated to preheating and/or postheating. The preheating and postheating can be integrated in a single laser array setup. It will be appreciated that various other scan head layouts are also possible.

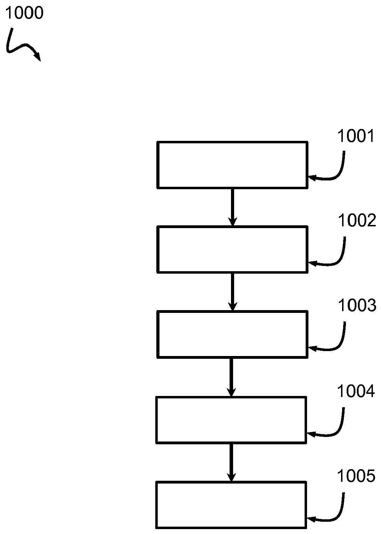

Fig. 7 shows a schematic diagram of a method 1000 for layerwise production of a tangible object, whereby the object is built up layer per layer by repeatedly providing a layer of building material onto a carrier and repeatedly performing method cycles. A method cycle may comprise different steps. In a first step 1001, layer data corresponding to a layer of the tangible object is provided. In a second step 1002, one or more predetermined regions of the layer of building material to be written are identified based on the layer data. In a third step 1003, a heating step is performed for selectively preheating, using radiation from at least one radiation source, the one or more identified predetermined regions prior to selectively writing these identified regions in a same method cycle, wherein one or more preheating regions of the layer of building material are determined based on the one or more predetermined regions of the layer of building material to be written. During selective preheating a temperature of the one or more preheating regions is locally increased from an initial temperature to an elevated preheating temperature remaining below a writing temperature of the building material in said preheating regions. In a fourth step 1004, the one or more predetermined regions are selectively exposed using radiation from at least one radiation source for writing the layer of the tangible object. In a fifth step 1005, a next layer of building material is provided, the next layer of building material being provided consecutive to the selectively exposed preceding layer of building material, for selective exposure thereof during a subsequent method cycle.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Method for layerwise production of a tangible object, whereby the object is built up layer per layer by repeatedly providing a layer of building material onto a carrier and repeatedly performing method cycles, each method cycle comprising the step of:
providing layer data corresponding to a layer of the tangible object;
identifying one or more predetermined regions of the layer of building material to be written, based on the layer data;
selectively exposing, using radiation from at least one radiation source, the one or more predetermined regions, for writing the layer of the tangible object; and
providing a next layer of building material, the next layer of building material being provided consecutive to the selectively exposed preceding layer of building material, for selective exposure thereof during a subsequent method cycle;
wherein one or more method cycles further comprise a further heating step for selectively preheating, using radiation from at least one radiation source, the one or more identified predetermined regions prior to selectively writing these identified regions in a same method cycle;
wherein one or more preheating regions of the layer of building material are determined based on the identified one or more predetermined regions of the layer of building material to be written, and wherein during selective preheating a temperature of the one or more preheating regions is locally increased from an initial temperature to an elevated preheating temperature remaining below a writing temperature of the building material in said preheating regions.

2. Method according to claim 1, wherein the one or more preheating regions selectively encompass the one or more predetermined regions of the layer of building material to be written.

3. Method according to claim 1 or 2, wherein the elevated preheating temperature is in a range of 0.1 to 50 % degrees Celsius smaller than the writing temperature, preferably 0.5 to 30 %, more preferably 1 to 20 % and most preferably 1 to 10 %.

4. Method according to claims 1, 2 or 3, wherein one or more method cycles further comprise a selective postheating step for postheating, using radiation from at least one radiation source, the one or more predetermined regions written in a same method cycle, wherein during postheating a cooling rate at the one or more predetermined written regions is decreased.

5. Method according to any one of the preceding claims, wherein a first building material and a second building material are used, the first building material having a first writing temperature and the second building material having a second writing temperature different than the first writing temperature, wherein an amount of preheating and/or postheating is chosen depending on the building material of the one or more predetermined regions to be written.

6. Method according to any one of the preceding claims, wherein at least one scan head is provided having a plurality of radiation sources configured to provide an adjustable radiation dose, wherein the scan head is relatively scanned across the surface of the layer of building material in at least one running direction for selectively irradiating the layer of building material for forming the layer of the tangible object.

7. Method according to any one of the preceding claims, wherein a plurality of subsets of radiation sources are provided being offset from each other in the at least one running direction, wherein at least one preheating subset is used for preheating the one or more predetermined to be written regions, and wherein at least one writing subset is used for subsequently writing the one or more predetermined regions in order to form the layer of the tangible object.

8. Method according to claim 7, wherein further at least one postheating subset is used for providing postheating.

9. Method according to claim 7 or 8, wherein the radiation sources of the at least one writing subset provide a finer incident spot size on the layer of building material than the at least one preheating subset and/or the at least one postheating subset.

10. Method according to any one of the claims 7-9, wherein the plurality of subsets are arranged in separate scan heads distanced from each other in the running direction.

11. Method according to any one of the claims 7-10, wherein a cascade of scan heads is employed being arranged in sequence in the at least one running direction, wherein when the cascade of scan heads are moved in the at least one running direction, a scan head with a preheating subset is followed by a scan head with a writing subset, optionally further followed by a scan head with a postheating subset.

12. Method according to any one of the preceding claims, wherein a sensor is provided configured for providing feedback indicative of a temperature distribution on the layer of building material, wherein the selective radiation exposure from the at least one radiation source for preheating and/or writing is determined based on the feedback.

13. System for layerwise production of a tangible object, the system comprising:
a controller configured to operate the system;
a carrier;
a layer depositor configured for providing a layer of building material to the carrier;
an exposure device comprising at least one radiation source; and
a scanner actuator for moving the carrier and the exposure device relative to each other;
wherein the controller is configured to repeatedly perform method cycles, each method cycle comprising the steps of:
providing layer data corresponding to a layer of the tangible object;
identifying, based on the layer data, one or more predetermined regions of the layer of building material to be written;
controlling the exposure device and the scanner actuator for performing the selective exposing the one or more predetermined regions, for writing the layer of the tangible object by means of radiation from the at least one radiation source, wherein the exposure device cooperates with the scanner actuator for providing the selective exposure;
activating the layer depositor for providing a next layer of building material consecutive to the selectively exposed preceding layer of building material, for selective exposure thereof during a subsequent method cycle;
wherein the controller is arranged to include a further heating step in one or more method cycles for selectively preheating, using radiation from at least one radiation source, the one or more identified predetermined regions prior to selectively writing these identified regions in a same method cycle,
wherein the controller is configured to determine the one or more preheating regions of the layer of building material based on the identified one or more predetermined regions of the layer of building material to be written, and wherein during selective preheating a temperature of the one or more preheating regions is locally increased from an initial temperature to an elevated preheating temperature remaining below a writing temperature of the building material in said preheating regions.

14. An apparatus for carrying out the method according to any one of the preceding method claims 1-12.

15. A computer readable medium comprising instructions executable by one or more processors, wherein the instructions being executed are configured to operate an additive manufacturing apparatus for carrying out a method according to any one of the claims 1-12.
